Europäisches Patentamt

European Patent Office

Office européen des brevets

(11) Publication number: **0 172 149**
**A2**

## (12) EUROPEAN PATENT APPLICATION

(21) Application number: **85850237.0**

(22) Date of filing: **15.07.85**

(51) Int. Cl.⁴: **A 47 G 25/14**
**B 29 C 45/14, A 47 G 25/38**

(30) Priority: **18.07.84 SE 8403767**

(43) Date of publication of application:
**19.02.86 Bulletin 86/8**

(84) Designated Contracting States:
**AT BE CH DE FR GB IT LI LU NL SE**

(71) Applicant: **TURESSONS METALL AB**

**S-335 00 Gnosjö(SE)**

(72) Inventor: **Molander, Dan Erik Lennart**
**Västanvägen 8**
**S-232 02 Akarp(SE)**

(74) Representative: **Ryrlén, Evert et al,**
**ALFONS HEDBERGS PATENTBYRÅ AB Aschebergsgatan**
**35**
**S-411 33 Göteborg(SE)**

(54) A clothes-hanger and a method and a machine for its manufacture.

(57) A clothes-hanger and a method and a machine for manufacturing said hanger. The clothes-hanger consists of injection moulded plastics and comprises a shape-determining reinforcement rod (14). The suspension hook (18) of the clothes-hanger is mounted in an attachment member (16) which is so formed in the injection-moulded plastics that the transfer of forces between the clothes-hanger arms and the suspension hook is effected without direct metal to metal contact between the reinforcement rod (14) and the suspension hook (18).

The clothes-hanger in accordance with the invention is manufactured in an injection-moulding apparatus the injection-moulding cavity of which consists of two mould halves. In one of these, a number of retainer means are provided. The reinforcement rod (14) is mounted in the retainer means and is retained in position during the injection-moulding operation, during which the clothes-hanger blank is manufactured. The suspension hook (18) is mounted in the clothes-hanger blank, whereupon it is removed from the retainer means and advanced to be bent to the desired shape.

EP 0 172 149 A2

./...

Fig.1

## A Clothes-Hanger and a Method and a Machine for Its Manufacture

The subject invention concerns a clothes-hanger and a method and a machine for manufacturing the clothes-hanger. The clothes-hanger comprises two garment-supporting arms and one suspension hook, said arms consisting of injection-moulded plastics, which is reinforced by means of a reinforcement rod.

Clothes-hangers and similar products for temporary use are usually made from plastics. These temporary clothes-hangers are comparatively weak when inexpensive and comparatively expensive when rigid. In addition, the requirement of shape-permanency in the product means that a rigid plastics material has to be chosen and in consequence thereof the friction of the clothes-hanger against the garment suspended therefrom will be low which is in conflict with the wish that the friction should be as high as possible. In order to impart better stability to clothes-hangers of this kind it has been suggested to manufacture metal-reinforced clothes-hangers provided with a plastics cover.

In accordance with one prior-art method clothes-hangers of this kind are manufactured on the basis of a clothes-hanger blank in the form of a special metal profile element which is given the desired appearance in a preliminary bending operation. The metal profile is attached to a clothes-hanger hook and is then dipped in a number of baths alternating with drying periods. The baths contain PVC plastics (polyvinyl chloride) and a solvent. The finished 1 clothes-hanger will have a shape coresponding to the original metal profile shape covered with a plastics cover.

Clothes-hangers manufactured in accordance with the prior--art technology described above suffer from a number of disadvantages. The chosen PVC plastics is mixed with a solvent which creates unhealthy working conditions. In addition, the plastics mixture may discolour garments suspended from the hanger. The plastic mixture is chosen because of its high friction, allowing knitted garments to be supported on the hanger without sliding off as well as ensuring that when the clothes-hanger blank is dipped into the bath the plastics material will adhere thereto.

The manufacture of clothes-hangers by repeated dipping of the clothes-hanger blank in baths containing plastic is time--consuming and the manufacturing costs of the clothes-hangers by this method will be high. As the hangers are intended for temporary use only it is desirable that the costs of manufacturing the hangers are low. The dipping of the clothes-hanger blank in the plastic bath also means that when the clothes-hanger blank is lifted from the baths the plastic will have a tendendy to run off the hanger, with the result that the plastic cover for this reason will be unevenly distributed and often exhibit drop-shaped formations or suggestions of such formations.

The clothes-hanger blank is held by the hook when dipped into the plastic baths. Consequently, a mechanical joint between the shape determining metal profile and the hook must be created before the clothes-hanger blank is dipped into the plastic bath. This joint usually is in the form of a weld joint, which requires a comparatively complicated operation.

It is important that no part of the metal profile remains uncovered in the finished clothes-hanger since this would involve risks of corrosion (for instance when the hanger is used to suspend moist clothes) and consequently discoloration of the garments.

The purpose of the subject invention is to provide a shape--permanent element, and particularly a clothes-hanger, which is simple and cheap to manufacture and therefore suitable for short--lived temporary uses, and which may easily be adapted to various wishes regarding its shape. By suitable choice of the plastics materials the clothes-hanger may be given a surface presenting good (high) frictional characteristics.

The purposes of the invention are achieved with a clothes--hanger which comprises two garment-supporting arms and one suspension hook, said arms consisting of injection-moulded plastics which is reinforced by means of a reinforcement rod, the clothes-hangers being characterized therein that the hook is mounted in an attachment member formed in the injection-moulded plastics and arranged to take tensile stress in such a manner that the transfer of forces from the hook and the load-supporting arms of the clothes-hanger is effected via this attachment member.

The method of manufacturing the clothes-hanger of the kind defined is characterized by the steps of mounting the reinforcement rod in retainer means in a mould cavity for the injection moulding of a clothes-hanger blank, by injecting plastics into the mould cavity so as to form the clothes-hanger blank together with the reinforcement rod, said clothes-hanger blank having an attachment member formed by the plastics material and serving to secure the suspension hook therein, and by opening the mould cavity and removing the clothes-hanger blank from the retainer means in the mould cavity and bending it to the desired shape.

The machine for manufacturing the clothes-hanger in accordance with the invention is characterized by an injection moulding apparatus comprising a number of mould cavities for the injection--moulding of clothes-hanger blanks and comprising two injection mould halves which are arranged to be separated and assembled, by retainer means arranged in one of the injection mould halves to retain the reinforcement rod during the injection-moulding operation and formed with a groove having walls which slightly converge towards its opening, said groove adapted to receive the reinforcement rod therein, by means for removal of the clothes-hanger blank after completion of the injection-moulding operation and by bending means arranged to bend the clothes-hanger blank to the desired shape.

The invention will be described in closer detail in the following with reference to the accompanying drawings, wherein

Fig. 1 is a lateral view of a clothes-hanger in accordance with the invention,

Fig. 2 is an overall plan view of a machine designed for the manufacture of clothes-hangers in accordance with the invention,

Fig. 3 is a lateral view of the machine in accordance with the invention,

Fig. 4 is a cross-sectional view through a part of the machine in accordance with the invention, in which part the very injection-moulding operation takes place,

Fig. 5 is a plan view of the lower half of the injection-moulding device in accordance with the invention,

Figs. 6 and 7 are views of a detail incorporated in the machine, which detail serves to retain a reinforcement rod in position during the injection-moulding operation, and

Fig. 8 is a corss-sectional view through the clothes-hanger along line VIII-VIII of Fig. 1.

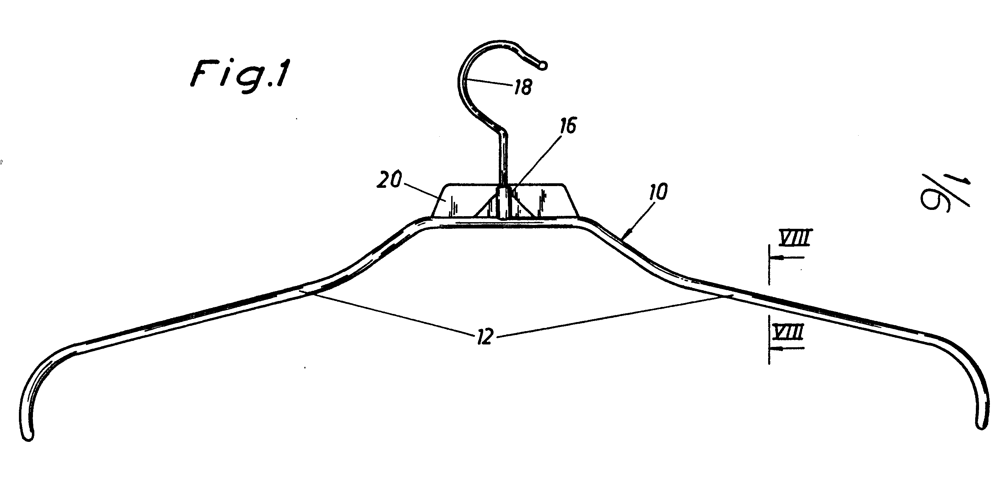

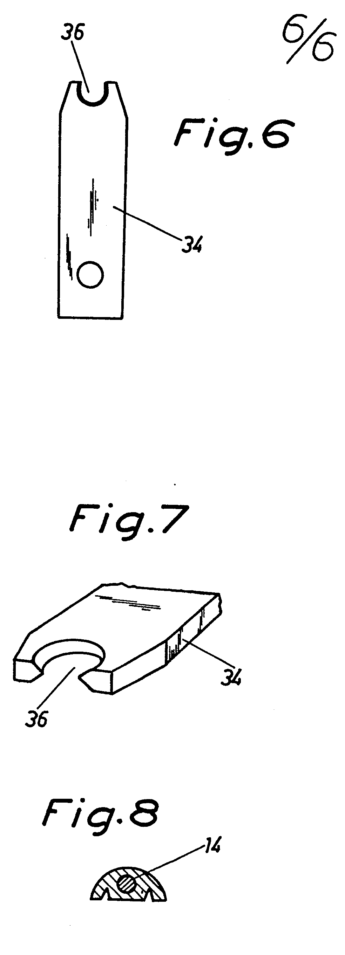

Fig. 1 illustrates one embodiment of a clothes-hangers 10 in accordance with the invention. The clothes-hanger comprises two arms 12 which are composed of injection-moulded plastics and which are reinforced by means of a metal rod 14 (see Fig. 8). At the centre of the clothes-hanger an attachment member 16 is formed in the injection-moulding process in which a suspension hook 18 may be mounted. The part of the suspension hook 18 which projects into the attachment member 16 is formed with peripheral ribs which engage with the interior walls of the attachment member. The load from the arms 12 of the clothes-hanger 10 is transferred via these ribs to the hook 18 which consequently need not be secured directly to the reinforcement rod 14. The clothes-hanger 10 is also foremd with an identification plate 20 on which relevant information may be displayed, such as the size of the garment. The arms 12 of the clothes-hanger 10 are bent to the desired shaped and appearance and Fig. 1 shows one example thereof. The arms 12 are easily given another configuration, if desired.

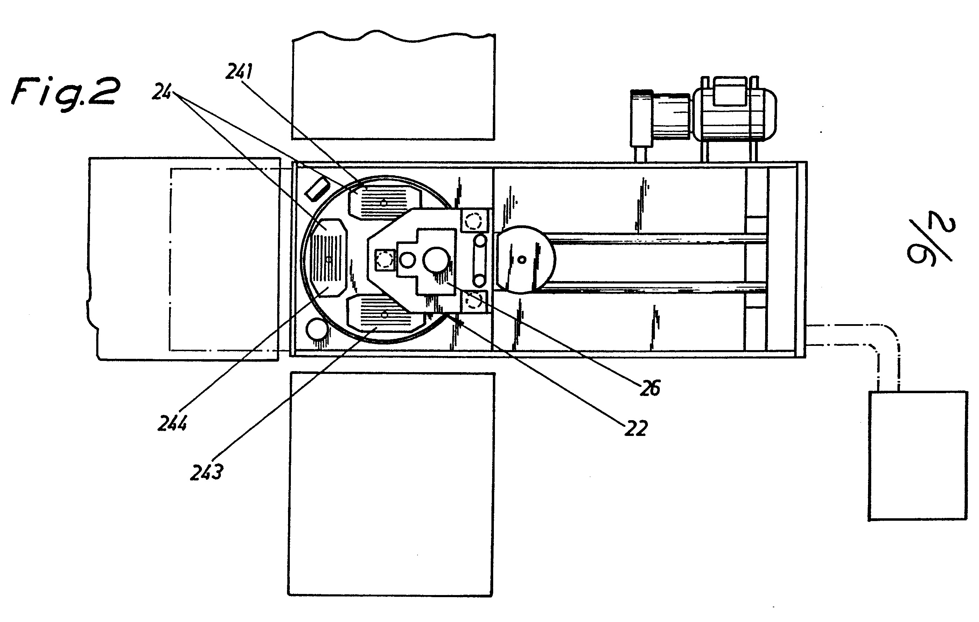

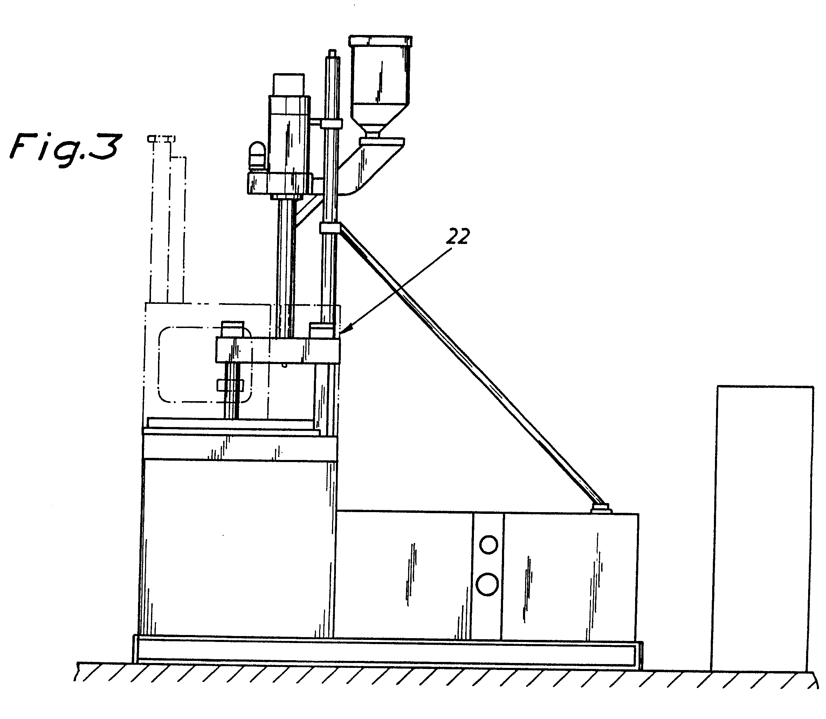

Figs. 2 and 3 are overall views of a machine 22 designed to manufacture clothes-hangers 10. The machine consists of a special injection-moulding device and ancillary equipment therefor. The injection-moulding device comprises in accordance with the illustrated embodiment a number of lower sections 24 (four) and one single upper section 26. Fig. 2 illustrates the manner according to which these four lower sections are mounted on a rotating table, the lower sections travelling between four stations, each corresponding to one stage in the manufacture of the clothes-hanger 10. Thus, the first lower section 241 is in position for despositon of the reinforcement rod 14, the second lower section is positioned directly and in alignment underneath the upper section 26 in position for the injection-moulding operation, the third lower section 243 is in position for mounting of the hook 18 and the fourth section 244 in position for loosening and removal of the finished-clothes-hangers 10. These four operational stages are carried out simultaneously in the various stations, thus providing efficient manufacture of the clothes-hangers.

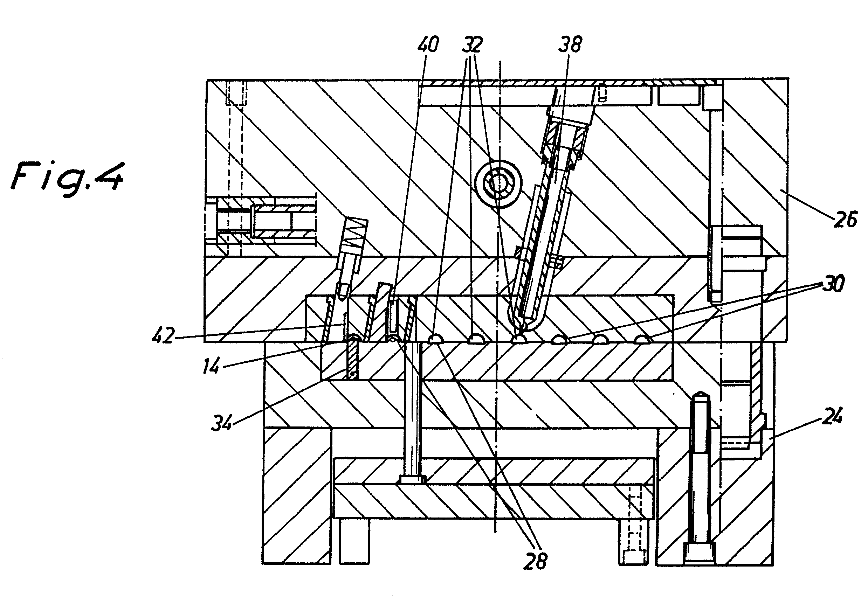

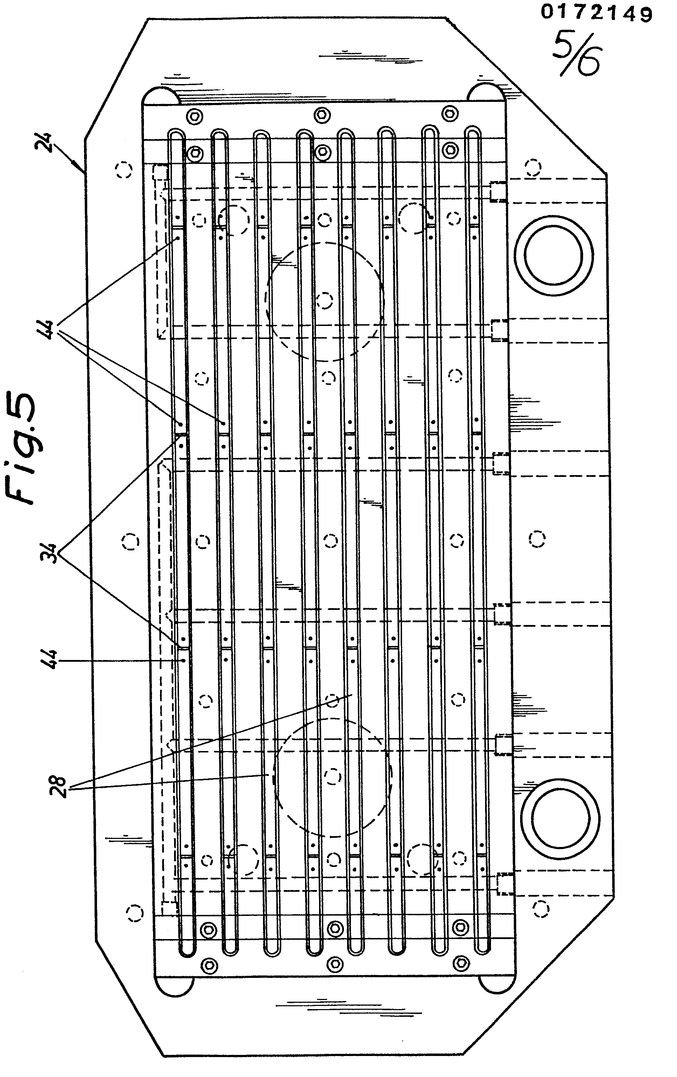

The bottom section 24 is illustrated in a plan view in Fig. 5 and in a cross-sectional view at the bottom half of Fig. 4. Each lower section 24 is formed with a number (8) mould halves 28 which together with the corresponding mould halves 30 of the upper section form eight moulds 32 (see Fig. 4) for the injection-moulding of clothes-hangers.

The reinforcement rods 14 are deposited in their individual lower mould half 28 in the lower section 241 (see Fig. 2) and are retained in the desired position in the lower mould half 28 with the aid of a number of retainer means 34 in each lower mould half 28. The retainer means 34 (see Figs. 6 and 7) are provided at their upper edges with a groove 36 which tapers upwardly and has an interior wall with comparatively sharp edges. The reinforcement rods 14 are forced into the grooves 36 in such a manner that interior walls of the latter cut into the wall of the reinforcement rod 14 to prevent undesirable lengthwise movements of the rod 14. The retainer means 34 grip the rod 14 in the manner of a snap fastener when the latter is mounted inside the groove 36, whereby the rod will be held securely in position during the entire injection-moulding operation.

The bottom section 24 is moved in underneath the upper section 26 to form an injection-moulding device. The upper section comprises a plastic compound injection device 38 for each mould 32 by means of which injection-moulding device 38 plastic material is supplied to each one of the moulds 32. The injection-moulding devices 38 preferably are positioned somewhat to the side of the centre of the finished clothes-hanger 10 and they are alternatingly displaced in opposite directions, thus making better use of the space in the upper section 26. In order to form the attachment member 16 the upper mould half 26 is formed with a core 40. Also, the upper mould half 26 is formed with a clearance 42 allowing the identification plate 20 to be formed.

After the injection-moulding operation the bottom section 24 together with the injection-moulded elements retained by the retainer means 34 are carried to position 243 (see Fig. 2). In this position the hooks 18 are automatically mounted in the attachment member 16 which is formed during the injection moulding. The mounting job may be performed by a robot and is effected by forcing the hooks down into the attachments 16. The hooks 18 will be retained in the attachments 16 with the aid of the peripheral ribs formed thereon.

The lower section 24 will finally arrive at position 244 in which the clothes-hanger blanks are loosened from the retainer means 34 with the aid of means arranged adjacent and on either side of the retainer means and having the shape of small rods 44 in the lower section 24, which rods are moved upwards, forcing the clothes-hanger blanks upwards. The clothes-hanger are then removed from the lower section 24 and bent to the desired shape by a separate device.

In principle all kinds of thermo-plastics material which may be injection-moulded could be used as the plastic compound in accordance with the invention. One example of such a material is styrene. Soft materials having good (high) frictional properties and which do not in themselves posses the required shape-permanency to be used in the manufacture of clothes-hangers obtain such permanency through the reinfocement.

With the aid of the technique described in the preamble it is impossible to form identification plates in an easy manner during the manufacture proper of the clothes-hanger. The plate must be manufactured separately and be mounted afterwards. As appears from Fig. 8 the reinforcement rod 18 has a round cross-sectional shape. The cross-sectional shape of the clothes-hanger is determined by the shape given to the injection-moulded plastics and is comparatively independent of the cross-sectional shape of the reinforcement rod 14, provided the rod is covered to a satisfactory extent by plastics.

**0172149**

This freedom of choice as regards the shape of the reinforcement material is not found in the prior-art devices referred to in the introduction, which prior art is restricted to use pre-formed and expensive metal profiles.

In the aforegoing description the other conventional and well-known details of the injection-moulding device have not been described in detail. Also the rest of the ancillary equipment is known per se and in order not to unnecessary lengthen the description, such details have been omitted.

The embodiment of the invention described in the aforegoing is to be regarded as one example only and a variety of other embodiments are possible within the scope of the appended claims. The shape of the identification plate 20 may be chosen according to wish. It is possible to design the moulds 32 in such a manner that the clothes-hanger blanks is given its final shape already in the injection-moulding process. The ancillary equipment may be chosen according to wish and need.

8

0172149

<u>C l a i m s</u>

1. A clothes-hanger comprising two garment-supporting arms (12) and one suspension hook (18), said arms (12) consisting of injection-moulded plastics which is reinforced by means of a reinforcement rod (14), c h a r a c t e r i z e d therein that the hook (18) is mounted in an attachment member (16) formed in the injection-moulded plastics and arranged to take tensile stress in such a manner that the transfer of forces from the hook (18) to the load-supporting arms (12) of the clothes-hanger (10) is effected via said attachment member (16).

2. A method of manufacturing clothes-hangers according to claim 1, which clothes-hangers comprise two garment-supporting arms (12) and one suspension hook (18), said arms (12) consisting of injection-moulded plastics which is reinforced by means of a reinforcement rod (14), c h a r a c t e r i z e d by the steps of mounting the reinforcement rod (14) in retainer means (34) in a moulding space (32) for the injection-moulding of a clothes-hanger blank, injecting a plastics compound into a mould cavity (32) so as to form the clothes-hanger blank together with the reinforcement rod (14), said clothes-hanger blank having an attachment member (16) formed by the plastics compound and serving to secure the suspension hook (18) therein, and opening the mould cavity (32) and removing the clothes-hanger blank from the retainer means (34) in the mould cavity (32) and bending it to the deisred shape.

3. A method as claimed in claim 2, c h a r a c t e r i-z e d therein that the suspension hook (18) is mounted in the attachment member (16) after opening of the mould cavity and prior to the removal of the clothes-hanger blank from the retainer means (34).

4. A machine for performing the method in accordance with the claim 2 for the manufacture of clothes-hangers, said clothes-hangers comprising two garment-supporting arms (12) and one suspension hook (18), said arms (12) consisting of injection-moulded plastics which is reinforced by means of a reinforcement rod (14), c h a r a c t e r i z e d by an injection-moulding apparatus having a number of mould cavities (32) for the injection-moulding of clothes-hanger blanks and comprising two injection-mould halves (28, 30) which are arranged to be separated andassembled, by retainer means

(34) arranged in one of the injection-mould halves (28) to retain the reinforcement rod (14) during the injection-moulding operation and formed with a groove (38) having walls converging towards its opening, said groove (38) adapted to receive the reinforcement rod (14) therein, by means (44) for removal of the clothers-hanger blank after completion of the injection-moulding operation and by bending means arranged to bend the clothes-hanger to the desired shape.

5. A machine as claimed in claim 4, c h a r a c t e r i-z e d  therein that the means for removel of the clothes-hanger blank consists of a number of pins (44) arranged about the retainer means (34) and movable between a retracted position and a position wherein they are arranged to force the clothes-hanger blank outwards.

6. A machine as claimed in claim 4, c h a r a c t e r i-z e d  therein that the retainer means (34) for retaining the reinforcement rod (14) in position are arranged in the bottom section (24) of the injection-moulding device and in that injection-moulding tools (38) are arranged in the upper section (26) of the injection-moulding device.

7. A machine as claimed in claim 6, c h a r a c t e r i-z e d  therein that the injection-moulding device comprises a number of lower sections (24) and one upper section (26), that said lower sections (24) are provided on a rotary table in such a manner that the lower sections which comprise the lower halves (28) of the mould cavities (3) may be moved to various positions, that the first one of these positions is the position for mounting of said reinforcement rods (14) in the retainer means (34), that in a second one of said positions the lower section (24) is applied below the upper section (26) in which the upper halves (30) of said mould cavities (32) are formed such that the mould cavities (32) are completed for the injection-moulding operation, and that in a further one of said positions the reinforced plastic elements are remvoed from the retainer means (34) to be transferred to the bending means.

0172149

1/6

Fig.1

Fig.2

26
22
241
24
244
243

Fig.3

22

Fig.4

Fig.5

*Fig.6*

*Fig.7*

*Fig.8*